# EUROPÄISCHE PATENTSCHRIFT

(11) **EP 1 310 031 B1**
(45) Veröffentlichungstag und Bekanntmachung des Hinweises auf die Patenterteilung: **20.01.2010**
(21) Anmeldenummer: 01962625.8
(22) Anmeldetag: 17.08.2001
(51) Int. Cl.: H02H 9/02, H02H 7/26

(54) **VORRICHTUNG ZUR SOFORTABSCHALTUNG BEI KURZSCHLÜSSEN IN ELEKTRISCHEN DC- UND AC-NETZEN VON ÜBER- UND UNTERWASSERSCHIFFEN, INSBESONDERE KAMPFSCHIFFEN, UND OFFSHORE-ANLAGEN**
INSTANT TRIPPING DEVICE FOR SHORT CIRCUITS IN ELECTRICAL DC AND AC NETWORKS OF SURFACE AND UNDERWATER VESSELS, ESPECIALLY COMBAT VESSELS, AND OFFSHORE INSTALLATIONS
DISPOSITIF D'ARRET IMMEDIAT EN CAS DE COURTS-CIRCUITS DANS DES RESEAUX ELECTRIQUES CC ET CA DE BATIMENTS DE SURFACE ET SOUS-MARINS, NOTAMMENT DE NAVIRES DE GUERRE, ET D'INSTALLATIONS OFFSHORE

(30) Priorität: 17.08.2000 DE 10040231
(43) Veröffentlichungstag der Anmeldung: 14.05.2003
(73) Patentinhaber: SIEMENS AKTIENGESELLSCHAFT, 80333 München (DE)
(72) Erfinder: AHLF, Gerd, 91369 Wiesenthau (DE); WACKER, Bernd, 91074 Herzogenaurach (DE)
(86) Internationale Anmeldenummer: PCT/DE2001/003056
(87) Internationale Veröffentlichungsnummer: WO 2002/015361

(56) Entgegenhaltungen:
- WO-A-98/27635
- HODGES ET AL: "A fault control system using solid state circuit breakers and high temperature superconducting fault current limiters" POWER MODULATOR SYMPOSIUM, 1996., TWENTY-SECOND INTERNATIONAL BOCA RATON, FL, USA 25-27 JUNE 1996, NEW YORK, NY, USA,IEEE, US, 25. Juni 1996 (1996-06-25), Seiten 232-234, XP010205294 ISBN: 0-7803-3076-5

## Beschreibung

Die Erfindung bezieht sich auf eine Vorrichtung zur Sofortabschaltung bei Kurzschlüssen in elektrischen DC- und AC-Netzen von Über- und Unterwasserschiffen, insbesondere Schiffen für Marineanwendugen, und Offshore-Anlagen.

Derartige als Bordnetze und elektrische Fahranlagen ausgebildete DC- und AC-Netze sind dem Charakter nach Inselnetze und unterliegen in ihrem Betrieb besonderen Anforderungen.

DC-Netze bzw. Gleichstromanlagen sind beispielsweise in Unterwasserschiffen weit verbreitet. Bei den bisher gelieferten Gleichstromanlagen und geplanten neuen Gleichstromanlagen für Unterwasserschiffe sind prospektive Summenkurzschlußströme von ca. 100 bis max. 320 kA möglich, was im Kurzschlußfall infolge hoher mechanischer Kräfte durch Stoßströme zu einer erheblichen dynamischen und thermischen Belastung der gesamten Gleichstromanlage führt.

AC-Netze bzw. Drehstromanlagen sind als elektrische Fahranlagen in Überwasserschiffen weit verbreitet. In derartigen Überwasserschiffen treten insbesondere bei großen Bordnetzleistungen hohe Kurzschlußleistungen auf. Die betriebsmäßige ständige Kopplung von Teilanlagen bzw. Teilnetzen ist nicht mehr möglich. Eine hohe Kurzschlußleistung ist unerwünscht, und zwar wegen der thermischen und dynamischen Kurzschlußstrombeanspruchungen der elektrischen Anlagen und Geräte- Soweit es um Verringerung der Netzrückwirkungen, Verbesserung der Spannungsstabilität bzw. der Schaffung eines steiferen Netzes bei niedrigerer Netzimpedanz, Verbesserung des Betriebsverhalten des Netzes sowie der Erhöhung der Versorgungssicherheit geht, ist sie dagegen erwünscht. Die Auslegung derartiger Drehstromanlagen ist daher ein Kompromiß zwischen machbaren Kurzschlußleistungen und mehr oder weniger guten Netzverhältnissen.

Die Höhe des Kurzschlußstromes richtet sich nach der Fehlerimpedanz am Kurzschlußort sowie nach den Beiträgen durch die Quellen, welche noch durch verbindende Schienen beeinflußt werden. Die Kurzschlußstrombeiträge der Quellen richten sich nach deren Impedanz.

Aus dem Stand der Technik bekannte Vorrichtungen zur Sofortabschaltung sind beispielsweise Leistungsschalter, die in DC-und AC-Netzen eingesetzt werden können. Entsprechende in AC-und DC-Netzen einsetzbare Leistungsschalter müssen für die zu erwartenden dynamischen Beanspruchungen dimensioniert werden. Leistungsschalter in DC-Netzen müssen nach extremen Kurzschlußabschaltungen gewartet werden, wobei ggf. Leistungsschalter ausgetauscht werden müssen.

Darüber hinaus werden in DC-Netzen als Vorrichtung zur Sofortabschaltung Sollschmelzstellen eingesetzt. Diese dienen der Strombegrenzung bei hohen Kurzschlußströmen und sind querschnittsmäßig optimierte Kupferverbinder, welche bei Überschreitung des Jouleintegrals schmelzen. Der Abzweig bzw. das Teilnetz, in dem sich die Sollschmelzstelle befindet, ist dann nicht mehr zu versorgen; die Sollschmelzstelle muß zunächst ausgetauscht werden.

Darüber hinaus sind sowohl in DC- als auch in AC-Netzen als Vorrichtungen zur Sofortabschaltung Sicherungen im Einsatz; diese brennen im Kurzschlußfall durch und müssen vor Wiederaufnahme des Betriebs ebenfalls gewechselt werden.

Darüber hinaus sind als Vorrichtungen zur Sofortabschaltung Halbleiterschalter in Gebrauch; derartige Halbleiterschalter haben vergleichsweise hohe Durchlaßverluste, welche permanent im Betrieb entstehen. Weiterhin ist das Abschaltvermögen wegen der zulässigen Ladungsträgerdichte begrenzt. Darüber hinaus wird als Schutzmaßnahme vorgeschlagen, DC- und AC-Netze, die jeweils mehrere Teilnetze aufweisen, mit offener Netzkupplung zu betreiben. In einem DC- bzw. Gleichstromnetz können sich Batterien unterschiedlich entladen. Die Gefahr hoher Ausgleichsströme bei Einlegen der kupplung steigt mit der Spannungsdifferenz zwischen den beiden Teilnetzen. Im AC-bzw. Drehstromnetz ergibt sich eine schlechtere Verfügbarkeit bei Ausfall der Erzeugung in einem Teilnetz, da erst nach Erkennen dieses Ausfalls die Netzkupplung eingelegt werden kann. Die motorischen Verbraucher an der beeinflußten Schiene können unter das Kippmoment fallen und dann nur noch mit Schwierigkeiten oder nicht mehr hochlaufen.

Darüber hinaus können weitere von Spannungseinbruch gefährdete Geräte wie z.B. Elektronik, Computer etc. Schaden erleiden, beispielsweise auch Datenverlust. Spannungseinbrüche gibt es sowohl bei Ausfall der Energieerzeugung wie auch bei Kurzschlüssen. Bei Kurzschlüssen pendeln alle elektrischen Parameter des Netzes, weshalb es zu weiteren Schutzabschaltungen bis hin zum Black Out kommen kann. Besonders bei Einsetzen von DC- bzw. AC-Netzen auf Schiffen für Marineanwendungen ist jedoch ein sicheres Bordnetz überlebenswichtig.

So bestehen z.B. in DC bzw. Gleichstromnetzen noch höhere Sicherheitsanforderungen. Bei den hier bisher verwendeten Kurzschlußkonzepten sind entweder alle Quellen und Verbraucher direkt zusammengeschaltet oder die Teilnetze der Fahr-und Bordnetzanlage sind über Leistungsschalter oder Spezialsicherungen zusammengeschaltet. Im Kurzschlußfall werden die Teilnetze getrennt und dadurch die maximalen Kurzschlußströme nahezu halbiert. Eine weitere Reduzierung erfolgt bisher durch den Einsatz von Sollschmelzstellen. Diese Sollschmelzstellen müssen nach einer Kurzschlußabschaltung ausgetauscht und die Leistungsschalter ggf. aufgearbeitet oder ausgewechselt werden. Nach einem solchen Kurzschlußfall ist ein Unterwasserschiff nur bedingt oder nicht manövrierfähig, je nach Schutzkonzept und Kurzschlußort.

Dokument WO-A-98 27635 offenbart eine Vorrichtung zur Sofortabschaltung bei Kurzschlüssen nach dem Stand der Technik.

Der Erfindung liegt die Aufgabe zugrunde, eine Vorrichtung zur Sofortabschaltung bei Kurzschlüssen in elektrischen D- und AC-Netzen von Über- und Unterwasserschiffen, insbesondere Schiffen für Marineanwendungen, und Offshore-Anlagen zu schaffen, mittels der erreicht wird, daß bei Auftreten von Kurzschlüssen weite Teile des DC- oder AC-Netzes unbeeinflußt bleiben bzw. weiter betrieben werden können, wobei darüber hinaus thermische und dynamische Beanspruchungen durch Kurzschlüsse weitestgehend verhindert werden sollen.

Diese Aufgabe wird erfindungsgemäß dadurch gelöst, daß die Vorrichtung zur Sofortabschaltung zumindest einen Hochtemperatur-Supraleitungs(HTSL)-Strombegrenze gemäß Anspruchs 1 aufweist. Durch den Einsatz von HTSL-Strombegrenzern wird erreicht, daß der Strom bereits im ersten Stromanstieg begrenzt wird. Danach erst erfolgt eine mechanische Abschaltung, beispielsweise durch einen Leistungsschalter. Nach dem Abschalten eines Kurzschlusses kann der HTSL-Strombegrenzer wieder in den Stromzweig eingebracht werden. Der Einsatz von HTSL-Strombegrenzern hat beispielsweise in Schaltanlagen von Unterwasserschiffen eine schnelle resistive Strombegrenzung im Fehlerfall, reduzierte mechanische und thermische Belastungen sowie eine Aufrechterhaltung des Betriebs im fehlerfreien Teilnetz zur Folge. Letzteres ist von besonderer Bedeutung für die zunehmende Anzahl von Verbrauchern mit Leistungselektronik. Die Manövrierfähigkeit eines Unterwasserschiffes ist daher beim Einsatz von HTSL-Strombegrenzern als Vorrichtung zur Sofortabschaltung weitaus besser gewährleistbar.

Durch den Einsatz von HTSL-Strombegrenzern sind im Vergleich zum Stand der Technik sehr schnell besonders hohe unbeeinflußte Kurzschlußströme bzw. di/dt begrenzbar.

Die erfindungsgemäß mit Hilfe von HTSL-Strombegrenzern ausgestaltete Vorrichtung zur Sofortabschaltung ist zweckmäßigerweise im DC-Netz bzw. AC-Netz in Kombination mit bisher im DC-Netz bzw. AC-Netz eingesetzten Schalt- und Schutzorganen, z.B. Sollschmelzstellen, Leistungsschaltern ud.dgl. einsetzbar.

Wenn der HTSL-Strombegrenzer in Reihe mit einem Leistungsschalter oder ggf. Lasttrennschalter angeordnet ist, kann der Leistungsschalter bzw. Lasttrennschalter konstruktiv auf kurze Ausschaltzeiten optimiert werden, wobei auf eine hohe dynamische Kurzschlußfestigkeit nicht geachtet werden muß.

Wenn ein HTSL-Strombegrenzer in einer Teilnetze des elektrischen Netzes verbindenden Netzkupplung angeordnet ist, ist es möglich, die Teilsysteme ständig nahezu rückwirkungsfrei zu kuppeln. Im Falle eines Kurzschlusses in einem Teilnetz wird der Beitrag aus dem intakten Teilnetz so niedrig gehalten, daß es zu keiner Überschreitung des Ausschaltvermögens kommt, wobei der Spannungseinbruch im intakten Teilnetz so kurz und gering wie möglich gehalten wird. Im Kurzschlußfall erfolgt eine Strombegrenzung des Einschaltstromstoßes auf ein geringes Vielfaches des Nennstroms innerhalb einer ms, wobei der Strom schnell auf den begrenzten Strom Ilim absinkt und im Abschaltzeitpunkt ca. dem Nennstrom INFCL entspricht. Die Teilnetze werden nach kurzer Zeit in Abhängigkeit von der Ausschaltzeit des angesteuerten Leistungsschalters, wobei zur Verringerung der Ausschaltzeit die Ansteuerung mittels Spannungsauslöser und Verriegelungsmagnet erfolgen kann, getrennt. Der Spannungseinbruch im intakten Teilnetz ist niedriger und kürzer, praktisch tritt er nur im Moment des Einschaltstromstoßes auf, d.h. während einer ms. Diese kurze Spannungseinbruchzeit wird für elektronische Geräte als tolerabel eingeschätzt und ist für rotierende Maschinen unkritisch.

Wenn an Quellen bzw. Einspeisungen mit den niedrigsten Impedanzen, wie z.B. Batterien, Generatoren oder Motoren, im elektrischen Netz HTSL-Strombegrenzer angeordnet sind, ist die Höhe des Kurzschlußstromes in Inselnetzen wie auf Schiffen und Offshore-Anlagen in grober Näherung eher unabhängig vom Ort des Kurzschlusses. Bei dieser Ausführung können u.U. sogar Sollschmelzstellen, wie sie beispielsweise in der Fahranlage für Unterwasserschiffe eingesetzt werden, eingespart werden, wodurch ein hohes Maß an Versorgungssicherheit erreicht wird.

Vorteilhaft kann ein HTSL-Strombegrenzer auch in Netzabzweigen angeordnet werden, die redundant aus zumindest zwei Teilnetzen gespeist werden.

Die im Zusammenhang mit der Anordnung eines HTSL-Strombegrenzers in einer Netzkupplung erzielbaren Vorteile werden auch dann erreicht, wenn ein HTSL-Strombegrenzer in einem AC-Netz in einer Teilnetze des AC-Netzes verbindenden Netzkupplung angeordnet ist. Darüber hinaus ist es vorteilhaft, wenn ein HTSL-Strombegrenzer in einem AC-Netz an einem Generator angeordnet ist, wobei er am Sternpunkt oder in der Generatorausleitung des Generators angeordnet sein kann.

Es ist möglich, einen HTSL-Strombegrenzer in einem AC-Netz an einem Transformator, und zwar vorteilhaft an dessen Oberspannungsseite, anzuordnen, wobei der Transformator seinerseits in einem Niederspannungseinspeisungsabzweig angeordnet ist. Auch kann ein HTSL-Strombegrenzer in einem AC-Netz an einem in einem Abzweig angeordneten Stromrichtertransformator angeordnet sein.

Sofern zu einem AC-Netz zwei Niederspannungsteilnetze gehören, ist es möglich, in einer Netzkupplung zwischen diesen beiden Niederspannungsteilnetzen einen HTSL-Strombegrenzer vorzusehen.

In einem DC-Netz kann ein HTSL-Strombegrenzer in einer Teilnetze des DC-Netzes verbindenden Netzkupplung angeordnet sein. Darüber hinaus kann ein HTSL-Strombegrenzer in einem DC-Netz an einem Generator, an einer Batterie und/oder an einem Motor angeordnet sein, womit die Quellen niedrigster Impedanz mit HTSL-Strombegrenzern versehen sind.

Der vorstehend geschilderte Einsatz von HTSL-Strombegrenzern erlaubt neue Wege in der Gestaltung von Bordnetzen bzw. Fahranlagen. Neben der Verringerung der dynamischen und thermischen Beanspruchung von Geräten und Anlagen ergeben sich die Möglichkeit des Aufbaus von Netzen mit höherer Kurzschlußleistung, eine höhere Versorgungszuverlässigkeit, und die Möglichkeit zum Einsatz preiswerterer Anlagen:
Wie bereits erwähnt, kommt es insbesondere in Inselnetzen, wie Schiffsnetzen, zum Einsatz hoher Stromrichterleistungen. Die Kurzschlußleistung des Netzes wird umso höher, je niedriger die Impedanzen, hier insbesondere die Reaktanz der speisenden Generatoren sowie die Reaktanz der Transformatoren ist. Werden mehrere Maschinen parallel betrieben, verringert sich die Impedanz. Damit wird das Verhältnis von Kurzschlußleistung zu angeschlossener Stromrichterleistung im gespeisten Netz höher, das wiederum eine Verringerung der Netzrückwirkungen im gespeisten Netz bewirkt, welche durch die dort angeschlossenen Umrichterlasten verursacht werden. Weiterhin wird das Netz durch Kupplung und damit Verringerung der Netzimpedanz starrer, was eine erhebliche Verbesserung der Spannungsstatik bedeutet, wobei der Spannungsabfall proportional zur Last bzw. zur Stromstärke durch die Impedanz ist.

Die Kupplung von Teilnetzen macht die Umschaltung bei Ausfall eines Energieerzeugers eines Teilnetzes überflüssig. Bisher, d.h. beim Stand der Technik, wurde üblicherweise mit offener Kupplung gefahren. Fällt hierbei die Energieerzeugung eines Teilnetzes aus, so muß der Ausfall erkannt werden und über Verriegelungsmechanismen die Kupplung automatisch oder per Hand eingeschaltet werden. Ist die Zeitdauer der Umschaltung zu lang, so kann es zum Abfall der motorischen Lasten unter das Kippmoment kommen, so daß ein Wiederhochlauf nicht zustande kommt. Im Stand der Technik konnte hier bedingt eine aufwendige Umschaltautomatik helfen. Im ungünstigen Fall müssen die Lasten ausgeschaltet und die gesamte Anlage neu gestartet werden. Dies ist umso unerfreulicher, je mehr es motorische Lasten wie Bugstrahlruder etc. betrifft, welche für die Manövrierfähigkeit absolut erforderlich sind.

Durch den Einsatz der HTSL-Strombegrenzer, insbesondere an den Quellen niedriger Impedanz, aber auch in der Netzkupplung, kann der Einsatz billigerer elektrischer Anlagen und Geräte wegen der verringerten thermischen und dynamischen Beanspruchung im Kurzschlußfall möglich sein. Insbesondere können billigere Schaltanlagen eingesetzt werden. Generatoren können mit einem höheren Verhältnis Kurzschlußstrom zu Nennstrom konstruiert werden. Transformatoren können für kürzere Kurschlußzeiten konstruiert werden, und zwar für Kurzschlußzeiten in der Größenordnung von 1ms im Vergleich zu Kurzschlußzeiten von 2s bis 5s beim Stand der Technik. Darüber hinaus können Transformatoren mit niedrigerer Kurzschlußimpedanz konstruiert werden. Damit wird eine höhere Spannungsstabilität im Netz erreicht, z.B. bei Anlauf hoher motorischer Lasten; auf Laststufenschalter kann wegen der geringen lastabhängigen Spannungsänderung bei niedrigen Impedanzen gänzlich verzichtet werden.

HTSL-Strombegrenzer können auch in Gleichspannungs- oder Gleichstromzwischenkreisen, z.B. von Umrichtern und Gleichstromschaltanlagen, an Netzkupplungen, Einspeisungs- und/oder Abgangszweigen angeordnet sein.

Vorteilhaft weist ein HTSL-Strombegrenzer als Hochtemperatursupraleitungswerkstoff
Y(Yttrium)Ba(Barium)Cu(Kupfer)O(Sauerstoff)-Verbindungen auf, die in Dünnfilmtechnik auf ein Substrat aufgebracht sind.

Vorzugshalber auf der dünnen Schicht aus dem Hochtemperatursupraleitungswerkstoff, welche auf dem Substrat aufgebracht ist, ist eine Shuntschicht angeordnet, die ihrerseits vorzugsweise aus Gold besteht, wobei diese Shuntschicht wesentlich dünner als die dünne Schicht aus Hochtemperatursupraleitungswerkstoff ist.

Die dünne Schicht aus Hochtemperatursupraleitungswerkstoff ist so bemessen, daß der Durchlaßstromwert ID des HTSL-Strombegrenzers ca. das 3fache des Nennstroms INFCL entspricht.

Um einen störungsfreien Betrieb des HTSL-Strombegrenzers auch bei geräuschloser Fahrt, insbesondere bei einem Unterwasserschiff, zu ermöglichen, ist ein Kryostat des HTSL-Strombegrenzers mit einem zusätzlichen Kältemittelreservoir ausgerüstet, wobei dieses zusätzliche Kältemittelreservoir im Kryostat selbst berücksichtigt oder als über Verbindungsleitungen an den Kryostat angeschlossener externer Ausgleichsbehälter ausgebildet sein kann.

Im folgenden wird die Erfindung anhand von Ausführungsformen unter Bezugnahme auf die Zeichnungen näher erläutert.

### Es zeigen:

- FIGUR 1: eine Übersichtsdarstellung eines in einer erfindungsgemäßen Vorrichtung zur Sofort-abschaltung eingesetzten HTSL-Strombegrenzers;
- FIGUR 2: eine diagrammartige Prinzipdarstellung des Funktionsablaufs eines HTSL-Strombegrenzers;
- FIGUREN 3 bis 6: unterschiedlich gestaltete DC-Netze mit einem oder mehreren HTSL-Strombegrenzern; und
- FIGUR 7: eine Prinzipdarstellung eines AC-Netzes mit HTSL-Strombegrenzern an verschiedenen möglichen Einbauorten.

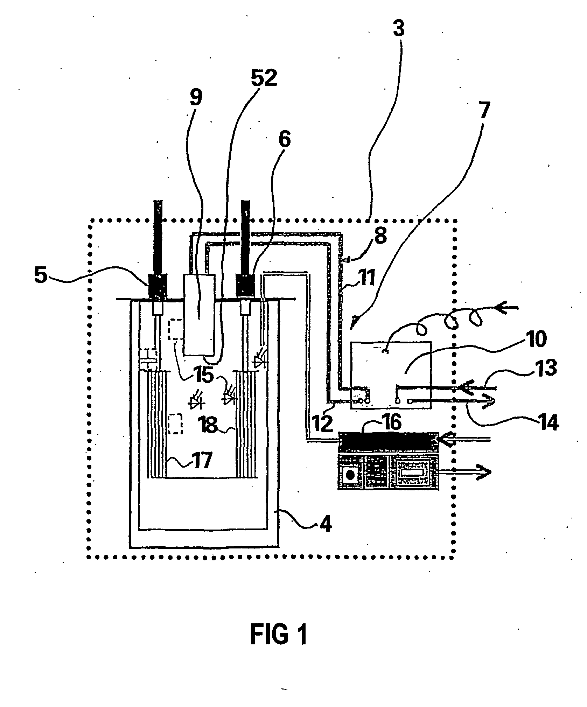

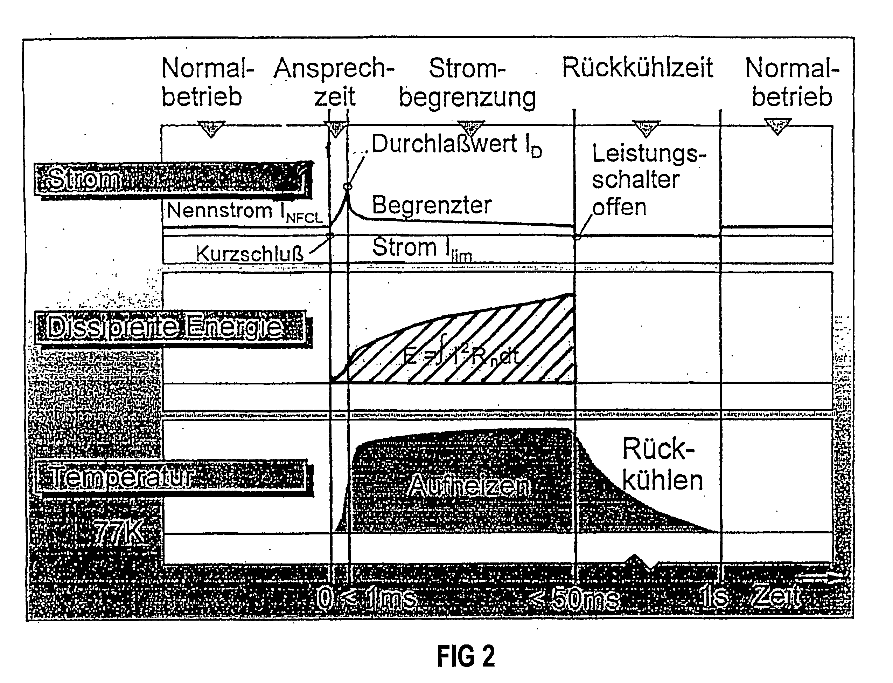

Zu einer erfindungsgemäßen Vorrichtung zur Sofortabschaltung bei Kurzschlüssen in elektrischen DC- 1 und AC-Netzen 2 von Über- und Unterwasserschiffen, insbesondere Schiffen für Marineanwendungen und Kreuzfahrtschiffen, und Offshore-Anlagen gehören HTSL-Strombegrenzer 3, deren grundsätzlicher Aufbau und deren grundsätzliche Funktionsweise anhand der FIGUREN 1 und 2 im folgenden näher erläutert wird.

Im. Zusammenhang mit FIGUR 1 sei darauf hingewiesen, daß mit dem dort gezeigten HTSL-Strombegrenzer 3 ein Leistungsschalter in Reihe geschaltet ist, der in FIGUR 1 nicht dargestellt ist. Bei dem mit dem HTSL-Strombegrenzer 3 in Reihe geschalteten Leistungsschalter kann es sich um den Leistungsschalter eines bestehenden DC- 1 bzw. AC-Netzes 2 oder um einen neuen Leistungsschalter oder Lastschalter eines neu zu konzipierenden DC- 1 bzw. AC-Netzes 2 handeln.

Der in FIGUR 1 gezeigte HTSL-Strombegrenzer 3 ist samt seiner Zusatzeinrichtungen in das DC- 1 bzw. AC-Netz 2 integrationsfähig ausgestaltet und hat einen Kryostaten 4, bei dem es sich im dargestellten Ausführungsbeispiel um einen a-magnetischen Edelstahlbehälter in doppelwandiger Ausführung mit Vakuumisolation handelt. Im Kryostaten 4 sind die eigentlichen Funktionselemente des HTSL-Strombegrenzers 3 in flüssigem Stickstoff bei einer Temperatur von ca. 77K aufgenommen. Es sind abweichende Temperaturen möglich, wenn andere Drücke eingestellt werden, z.B. durch Abpumpen eine Temperatur von 67K. Der HTSL-Strombegrenzer 3 wird über Stromdurchführungen 5, 6 an eine auf Raumtemperatur befindliche Sammelschiene angebunden.

Zur Rekondensation des im Kryostaten 4 vorhandenen verdampften flüssigen und nunmehr gasförmigen Stickstoffs wird ein Refrigerator 7, im wesentlichen bestehend aus einem Heliumverdichter 10 und einem Kaltkopf 9 mit einem Kondensator 52, eingesetzt. Hierdurch handelt es sich um einen geschlossenen Kühlkreislauf innerhalb des Kryostaten 4; entsprechend ist es nicht erforderlich, im Normalbetrieb Kältemittel in Form von flüssigem Stickstoff (LN2) nachzufüllen.

Der Heliumverdichter 10 versorgt den Kaltkopf 9 durch Vor-und Rücklaufdruckleitungen 11, 12 eines Kreislaufs 8 mit flüssigem Helium. Innerhalb des Kryostaten 4 wird verdampfter Stickstoff am Kondensator 52 des Kaltkopfes 9, der in den Kryostaten 4 hineinragt, rekondensiert. Die Kühlung des Heliumverdichters 10 erfolgt mittels einer Kühlwasserzu- 13 und einer Kühlwasserableitung 14, wobei das Kühlwasser beispielsweise von einem Zwischenkühlsystem eines Schiffes zur Verfügung gestellt werden kann.

Um den Kühl- bzw. Kältemittelbedarf im Kryostaten 4 z.B. bei einer geräuschlosen Fahrt eines Unterseebotes realisieren zu können, ist für die Überbrückung des Kühl- bzw. Kältemittelbedarfes während dieses Zeitraums ein zusätzliches geeignetes Kältemittelreservoir vorgesehen, welches entweder im Kryostaten 4 bereits berücksichtigt ist oder als externer Ausgleichsbehälter über Verbindungsleitungen mit dem Kryostaten 4 verbunden ist.

Alternativ zu dem Refrigerator 7 mit dem Kreislauf 8, dem Kaltkopf 9 und dem Heliumverdichter 10 kann eine offene Nachfülllösung gewählt werden. Des weiteren können anstelle flüssigen Stickstoffes andere Kühl- bzw. Kältemittel eingesetzt werden. Flüssiger Stickstoff hat jedoch hervorragende elektrische Eigenschaften, ist vergleichsweise preiswert und hat günstige Brandschutzeigenschaften.

Zum HTSL-Strombegrenzer 3 gehört eine Sensorik 15, deren Sensoren innerhalb des Kryostaten 4 angeordnet sind. Mittels der Sensorik 15 wird der Betriebszustand des Aktivteils des HTSL-Strombegrenzers 3 überwacht. Die Sensorik 15 ist an geeignete Auswertegeräte 16 angeschlossen, mittels denen Analog- und Binärsignale z.B. an einen Auslöser des Leistungsschalters im Strombegrenzerpfad und an eine zentrale Melde- und Steuerzentrale übergebbar sind.

Darüber hinaus ist es auch möglich, entsprechende Signale vom Refrigerator 7 zu generieren und zur Signalisierung an die Melde- und Steuerzentrale zu übergeben.

Zum elektrischen Aufbau des HTSL-Strombegrenzers 3 gehören die Stromzuführungen 5, 6, HTSL-Strombegrenzermodule 17, 18 sowie deren Verschaltungselemente.

Eine wichtige Eigenschaft des vorstehend geschilderten HTSL-Strombegrenzers 3 ist es, daß er bei betrieblichen Strömen und Überströmen nicht auslöst. Da der HTSL-Strombegrenzer 3 als Primärauslöser wirkt, muß seine Dimensionierung auf die entsprechenden Erfordernisse unter Berücksichtigung der Selektivität ausgelegt sein.

Falls der HTSL-Strombegrenzer 3 versagt, ist die Eigensicherheit des HTSL-Strombegrenzers 3 zu gewährleisten. Die Auslegung muß daher so erfolgen, daß eine innere Zerstörung, ausgelöst durch äußere mechanische Einwirkung oder inneren Defekt, zur Löschung eines evtl. auftretenden Lichtbogens und zur Trennung des Stromkreises führt.

Die Funktionsweise des in FIGUR 1 dargestellten HTSL-Strombegrenzers 3 wird im folgenden anhand von FIGUR 2 erläutert. Überschreitet der Strombegrenzerstrom seinen kritischen Wert, so befindet sich der Supraleiter des HTSL-Strombegrenzers 3 zunächst im sog. Flux-Flow-Bereich. Der kritische Wert des Strombegrenzerstroms ist der Wert, bei dem der Spannungsabfall über dem Supraleiter des HTSL-Strombegrenzers 3 kleiner als 1µV je cm Länge des Supraleiters beträgt. Der normalleitende Bereich des Supraleiters wird gemäß seiner Spannungs-Strom-Kennlinie erreicht, wenn der Spannungsabfall über dem Supraleiter sehr viel größer als 1µV je cm Länge des Supraleiters ist. Der Supraleiter wird erst dann wieder supraleitend, wenn die kritische Temperatur und der kritische Strom unterschritten werden, was nur dann möglich ist, wenn der Stromkreis, in dem sich der HTSL-Strombegrenzer 3 befindet, unterbrochen wird, so daß keine weitere Aufheizung mehr erfolgt und das die Funktionselemente des HTSL-Strombegrenzers 3 im Kryostat 4 umgebende Stickstoffbad mit z.B. 77K rückkühlen kann.

Im Bereich zwischen dem Spannungsabfall von 1µV/cm und dem normalleitenden Zustand des Supraleiters muß es nicht zur Auslösung des HTSL-Strombegrenzers kommen, solange seine Kennlinie nicht verlassen ist. Wegen des Spannungsabfalls wird Energie in das im Kryostaten 4 befindliche Stickstoffbad dissipiert. Dieser Zustand kann solange aufrecht erhalten werden, wie das thermische Gleichgewicht zwischen der im Stickstoffbad als dissipierte Energie auftretenden zugeführten Stromwärme und der durch den Stickstoff abführbaren Wärme besteht. Die Auslösekennlinie des Supraleiters kann mittels einer Strom-Zeit-Kennlinie ausgedrückt werden, wie sie von Sicherungen her bekannt ist. Diese Strom-Zeit-Kennlinie ist abhängig vom Werkstoff des Supraleiters. Im Vergleich zu denjenigen von Sicherungen haben in Dünnfilmausführung ausgebildete HTSL-Strombegrenzer 3 eine super schnelle Strom-Zeit-Kennlinie. Der besondere Vorteil von HTSL-Strombegrenzern 3 dabei ist, daß der Durchlaßwert ID, wie in FIGUR 2 gezeigt, physikalisch bedingt ca. auf das maximal 3fache des kritischen Stromes bzw. Nennstromes begrenzt werden kann, unabhängig von der Höhe des unbeeinflußten Kurzschlußstromes.

Nach einem Begrenzungsvorgang mit Öffnen des Leistungsschalters kühlt der Supraleiter des HTSL-Strombegrenzers 3 während seiner Rückkühlzeit zurück und ist innerhalb kurzer Zeit wieder einsatzbereit. Diese Rückkühlzeit hängt u.a. von der Temperatur des Supraleiters im Abschaltemoment ab und dauert erfahrungsgemäß 1 bis 2 Sekunden. Bei Versagen des Leistungsschalters fließt der Strom weiter durch den Supraleiter des HTSL-Strombegrenzers 3 und heizt diesen so stark auf, daß sein Temperaturlimit erreicht wird, wodurch der Supraleiter mit seinem Substrat durch thermomechanische Spannungen zerstört werden kann. Der Stromkreis wird somit auch bei Versagen des Leistungsschalters unterbrochen. Der HTSL-Strombegrenzer 3 verfügt daher über das Merkmal der Eigensicherheit.

Die in FIGUR 2 gezeigte Charakteristik des HTSL-Strombegrenzers 3, nämlich den unbeeinflußten Kurzschlußstrom auf ca. maximal das 3fache im Durchlaßwert ID zu begrenzen, wird erreicht, wenn der HTSL-Strombegrenzer 3 einen Hochtemperatur-supraleiter aus einem Hochtemperatursupraleitungswerkstoff aus Y(Yttrium)Ba(Barium)Cu(Kupfer)O(Sauerstoff)-Verbindungen aufweist und in Dünnfilmtechnik ausgeführt ist.

Die Höhe des unbeeinflußten Kurzschlußstromes bzw. der Stromanstieg je Zeiteinheit di/dt hat nahezu keinen Einfluß auf die Höhe des Durchlaßwerts ID; hierdurch unterscheidet sich der HTSL-Strombegrenzer 3 von Halbleiterschaltern, bei denen nur eine zulässige Ladungsträgerdichte gemäß Datenblatt erlaubt ist.

Eine nahezu rückwirkungsfreie Trennung von Teilanlagen von DC- 1 und AC-Netzen 2 ist durch den vorstehend geschilderten HTSL-Strombegrenzer 3 erreichbar, der mit einer Ansprechzeit von maximal 1ms resistiv begrenzt. Die anschließende Abtrennung der Teilanlagen erfolgt durch den in FIGUR 1 nicht gezeigten, in Reihe zum HTSL-Strombegrenzer 3 angeordneten Leistungsschalter, welcher, wenn er in Kombination mit dem HTSL-Strombegrenzer 3 eingesetzt wird, konstruktiv auf kurze Ausschaltzeiten optimiert werden kann und nicht - wie bisher
- auf hohe dynamische Kurzschlußfestigkeit.

Wie vorstehend bereits erläutert, wirkt der HTSL-Strombegrenzer 3 selbsttätig als Primärauslöser und benötigt daher kein externes Signal, beispielsweise von einem Schutzgerät, welches bei konventionellen Anlagen ohne HTSL-Strombegrenzer 3 einem Auslöser des Leistungsschalters ein Kommando übermittelt.

Der HTSL-Strombegrenzer 3 erholt sich nach seiner Trennung vom DC- 1 bzw. AC-Netz 2 selbständig und ist nach einer Rückkühlzeit von maximal 1 bis 2 Sekunden wieder einsatzbereit. Ein Auswechseln wie bei einer Sicherung oder einer Sollschmelzstelle entfällt.

Durchlaßverluste wie bei Halbleitern entstehen nicht. Der HTSL-Strombegrenzer 3 selbst ist supraleitend, so daß im Normalberieb des DC- 1 bzw. AC-Netzes 2 kein Spannungsabfall entsteht.

Die Anforderungen an die Dimensionierung des bzw. der HTSL-Strombegrenzer 3 werden durch die Bedingungen am Einsatzort bestimmt, wie auftretende Netzspannung, Nennströme, betrieblich und nicht betriebliche Vorgänge, wie Überströme, Selektivitätskriterien aus Sicht des elektrischen Schutzes und Auswahl des zum HTSL-Strombegrenzer 3 in Reihe befindlichen Leistungsschalters.

Der vorstehend geschilderte HTSL-Strombegrenzer 3 kommt in Vorrichtungen zur Sofortabschaltung zum Einsatz, die in DC-Netzen auf Über- und Unterwasserschiffen, in AC-Netzen 2 auf Über- und Unterwasserschiffen und in AC- und DC-Netzen 2, 1 auf Offshore-Anlagen integriert werden.

Derartige HTSL-Strombegrenzer 3 können bei der Ertüchtigung, Modernisierung bzw. Grundüberholung derartiger Netze integriert werden, z.B. wenn Batterien mit größerer Kapazität die bisher vorhandenen Batterien ersetzen sollen. Der Einsatz der HTSL-Strombegrenzer 3 sowohl in AC- 2 als auch in DC-Netzen 1 ist in Kombination mit den bereits bestehenden Schalt- und Schutzorganen möglich. In neu zu konzipierenden DC- 1 bzw. AC-Netzen 2 können sämtliche Designvorteile, die sich aufgrund des Einsatzes von HTSL-Strombegrenzern 3 ergeben, auf die Gesamtanlage übertragen werden.

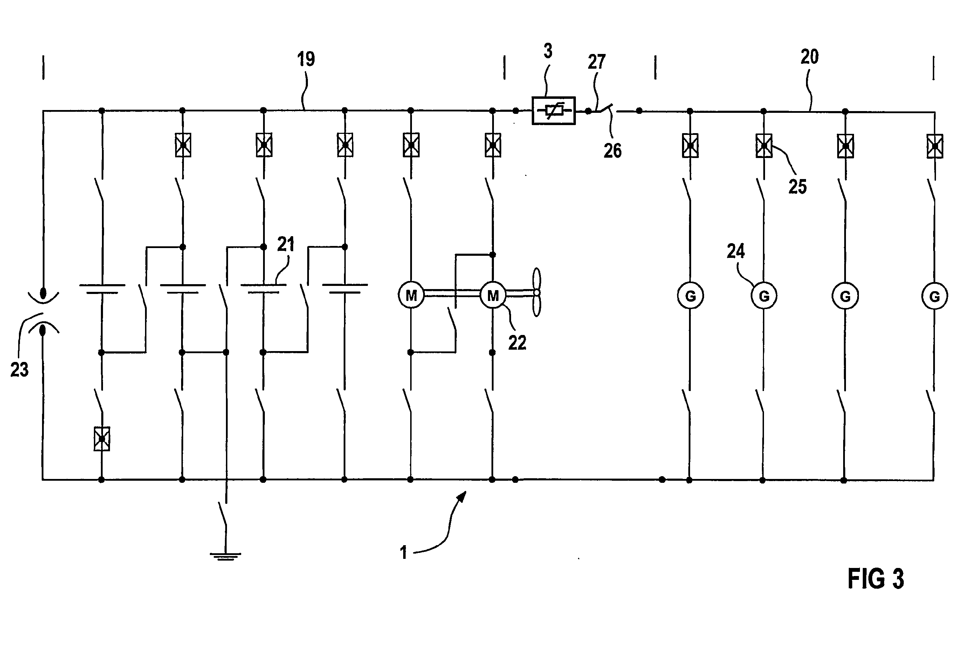

Bei einem in FIGUR 3 gezeigten DC-Netz 1 eines Unterwasserschiffes ist ein Haupt-Teilnetz 19 und ein Generator-Teilnetz 20 vorgesehen. Zum Haupt-Teilnetz 19 gehören Batterien 21, Motoren 22 sowie ein Ladeanschluß 23. Zum Generator-Teilnetz 20 gehören Generatoren 24. Die einzelnen Elemente sowohl des Haupt-Teilnetzes 19 als auch des Generator-Teilnetzes 20 sind mittels Sollschmelzstellen 25 und Leistungsschaltern 26 gesichert.

Zwischen dem Haupt-Teilnetz 19 und dem Generator-Teilnetz 20 ist eine Netzkupplung 27 vorgesehen, in der ein HTSL-Strombegrenzer 3 sitzt.

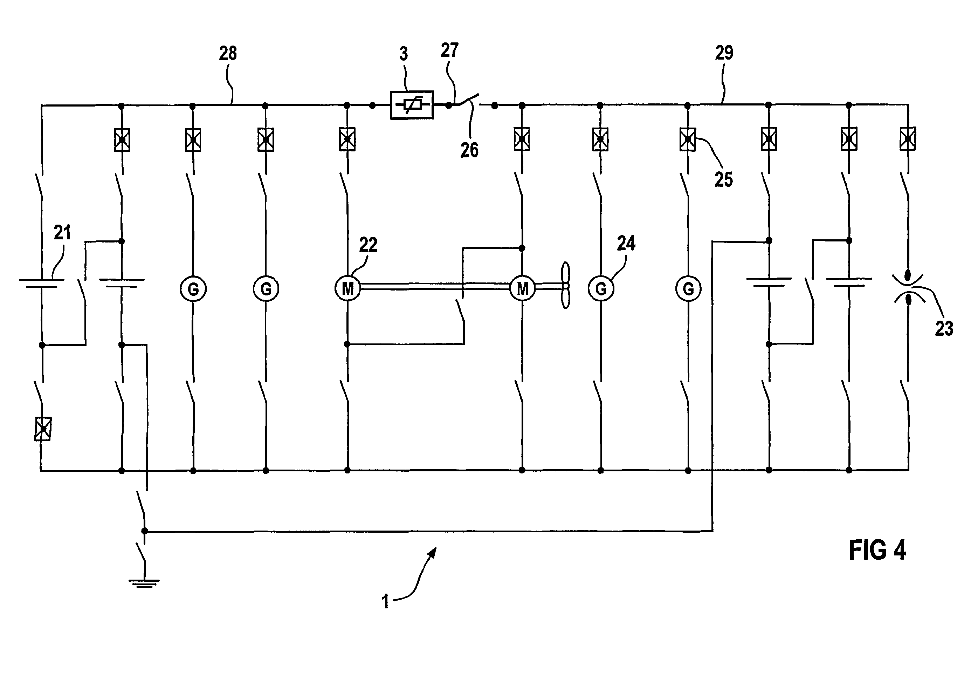

Die in FIGUR 4 gezeigte Ausführungsform eines DC-Netzes 1 eines Unterwasserschiffes unterscheidet sich von der vorstehend näher beschriebenen dadurch, daß das DC-Netz 1 ein erstes Teilnetz 28 und ein zweites Teilnetz 29 aufweist, die über die Netzkupplung 27 miteinander verbunden sind. Die beiden Teilnetze 28, 29 haben jeweils Batterien 21, einen Motor 22 und Generatoren 24, wobei im zweiten Teilnetz 29 der Ladeanschluß 23 vorgesehen ist. In der Netzkupplung 27 ist ein HTSL-Strombegrenzer 3 vorgesehen.

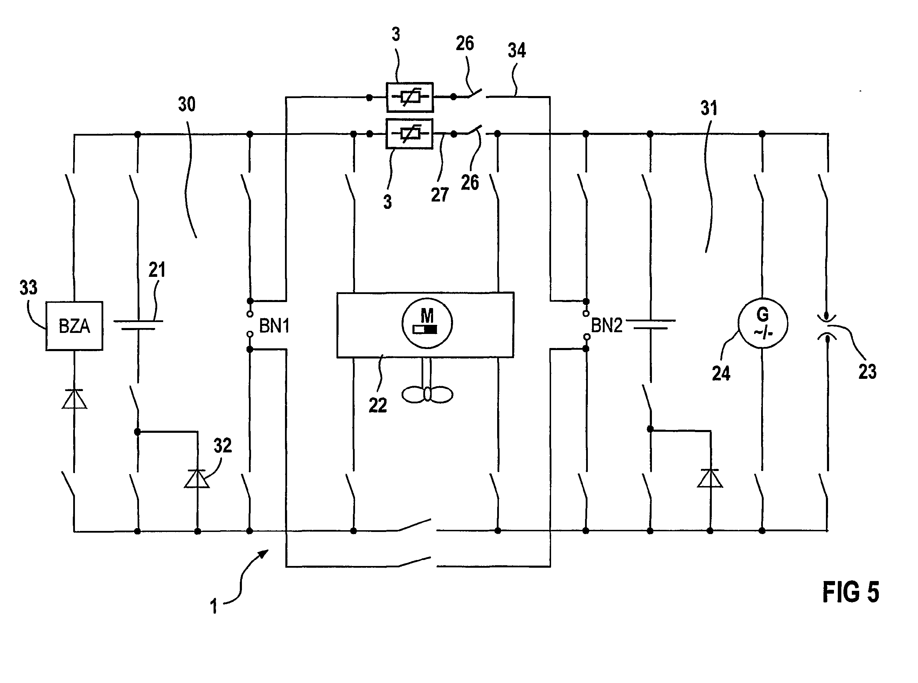

Eine in FIGUR 5 gezeigte Ausführungsform des DC-Netzes 1 für Unterwasserschiffe hat ein erstes Bordnetz 30 und ein zweites Bordnetz 31. In beiden Bordnetzen 30, 31 ist der Motor 22, eine Batterie 21 und sind Dioden 32 vorgesehen. Im ersten Bordnetz 30 ist des weiteren eine Brennstoffzellenanlage 33, im zweiten Bordnetz 31 ein Generator 24 sowie ein Ladeanschluß 23 vorgesehen. Außer in der Netzkupplung 27 über den Motor 22 ist in einer die beiden Bordnetze 30, 31 verbindenden weiteren Netzkupplung 34 ein weiterer HTSL-Strombegrenzer 3 vorgesehen.

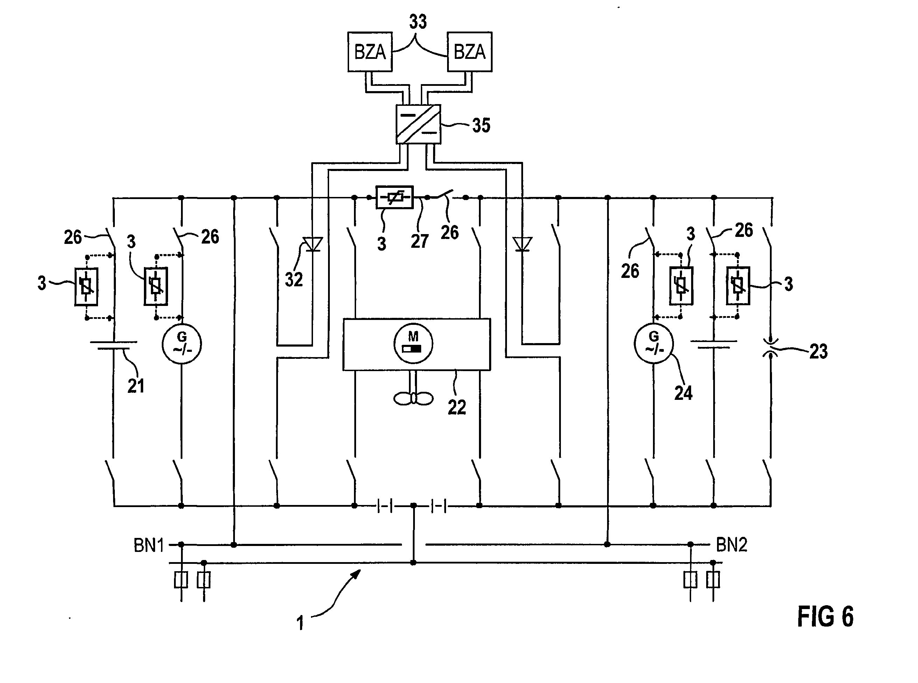

Bei der in FIGUR 6 gezeigten Ausführungsform eines DC-Netzes 1 für Unterwasserschiffe erfolgt der Anschluß zweier Brennstoffzellenanlagen 33 über einen DC/DC-Steller 35. Hierbei sind den Quellen niedriger Impedanz, wie den Generatoren 24 und Batterien 21 HTSL-Strombegrenzer 3 zugeordnet.

Durch den Einsatz der HTSL-Strombegrenzer 3 in den DC-Netzen von Unterwasserschiffen, und zwar in deren Netzkupplungen 27, wird der Beitrag des vom HTSL-Strombegrenzer 3 jeweils abgewandten Teilnetzes im Durchlaßwert reduziert und auf beispielsweise ca. 15kA für 1ms und anschließend ca. 5kA für 29ms reduziert. Am Kurzschlußort wird nunmehr erheblich weniger Energie umgesetzt. Ein herausragender Vorteil des Einsatzes von HTSL-Strombegrenzern 3 besteht darin, daß das intakte Teilnetz nahezu unbeeinflußt bleibt, da der Beitrag zum Kurzschlußstrom an der Fehlerstelle sofort auf ca. den Wert des Nennstroms oder je nach Auslegung des HTSL-Strombegrenzers 3 darüber oder darunter reduziert wird. Das Unterwasserschiff bleibt somit manövrierfähig.

Bei allen DC-Netzen 1, in denen HTSL-Strombegrenzer 3 eingesetzt werden, kommt es im Vergleich zum Stand der Technik zu einer erheblichen Verkleinerung der Summenströme, zu verringerten Einzelgerätebelastungen und damit zu geringeren dynamischen und thermischen Kurzschlußbelastungen. Hierdurch ergibt sich ein wesentlich verringerter Wartungsaufwand.

Darüber hinaus werden durch den Einsatz von HTSL-Strombegrenzern 3 in DC-Netzen 1 Gewichts- und Volumeneinsparungen erreicht, der Wegfall einiger oder aller Sollschmelzstellen, die Verkleinerung der Lichtbogenausblasräume der Leistungsschalter 26, wobei darüber hinaus der Einsatz einfacherer und leichterer Leistungsschalter 26 möglich ist.

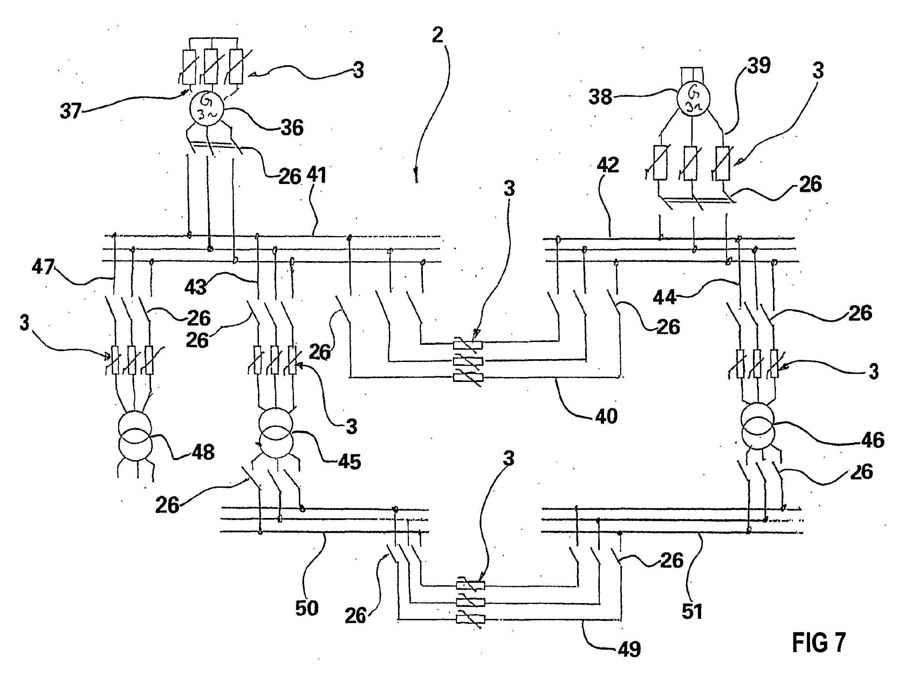

Das in FIGUR 7 in unterschiedlichen Varianten prinzipiell dargestellte AC-Netz 2 zeigt eine HTSL-Strombegrenzereinheit 3, die an einem Mittelspannungsgenerator 36 angeordnet ist, der eine Quelle niedriger Impedanz bildet. Am Mittelspannungsgenerator 36 ist die HTSL-Strombegrenzereinheit 3 am Sternpunkt 37 angeordnet. Der Sternpunkt 37 des Mittelspannungsgenerators 36 eignet sich in besonderer Weise zur Anordnung der HTSL-Strombegrenzereinheit 3, da er meist in einem separaten Sternpunktkasten herausgeführt ist, wo sich weitere Geräte anschließen lassen. Entsprechend ist insbesondere der nachträgliche Einbau einer HTSL-Strombegrenzereinheit 3 platzmäßig flexibler handhabbar.

An einem Mittelspannungsgenerator 38, der ebenfalls eine Quelle niedriger Impedanz bildet, ist eine HTSL-Strombegrenzereinheit 3 vorgesehen, wobei sich im Falle des Mittelspannungsgenerators 38 die HTSL-Strombegrenzereinheit 3 in der Generatorausleitung 39 befindet.

Des weiteren ist es möglich, eine HTSL-Strombegrenzereinheit 3 in einer Netzkupplung 40 anzuordnen, mittels der die beiden Teilnetze 41, 42 verbunden bzw. verbindbar sind. Der Einbau der HTSL-Strombegrenzereinheit 3 in der Netzkupplung 40 ist sowohl im Falle eines Neubaus als auch im Falle einer Nachrüstung gut geeignet, da die Schaltanlagen meist räumlich voneinander getrennt sind.

In zwei Niederspannungseinspeisungsabzweigen 43, 44, von denen einer dem Teilnetz 41 und der andere dem Teilnetz 42 unmittelbar zugeordnet ist, ist jeweils ein Transformator 45 bzw. 46 angeordnet, die jeweils oberspannungsseits mit einer HTSL-Strombegrenzereinheit 3 versehen sind. Durch den oberspannungsseitigen Einbau der HTSL-Strombegrenzereinheit 3 wird bei einem Klemmenkurzschluß der Transformator 45 bzw. 46 unterspannungsseitig ebenfalls geschützt. Grundsätzlich ist es alternativ möglich, die HTSL-Strombegrenzereinheit 3 niederspannungsseitig des Transformators 45 bzw. 46 einzubauen; dies ist jedoch nachteilig für die für größere Ströme zu dimensionierenden Stromzuführungen, wodurch aufgrund höherer Verluste eine Vergrößerung des Refrigerators 7 der jeweiligen HTSL-Strombegrenzereinheit 3 erforderlich wäre.

Ein in einem Abzweig 47 angeordneten Stromrichtertransformator 48, mittels dem beispielsweise ein Hauptantrieb versorgt werden kann, ist ebenfalls eine HTSL-Strombegrenzereinheit 3 zugeordnet. Umrichterventile können damit für kleinere Kurzschlußströme dimensioniert werden. Der Einsatz kleinerer und konstruktiv-technisch weniger aufwendiger Bauelemente ist möglich, die zudem mit weniger Sicherheit dimensioniert werden müssen und dadurch höher ausnutzbar sind.

Darüber hinaus kann eine HTSL-Strombegrenzereinheit 3 in einer weiteren Netzkupplung 49 vorgesehen sein, wobei diese Netzkupplung 49 die beiden Niederspannungsanlagen bzw. -Teilnetze 50, 51 verbindet.

Es sei darauf hingewiesen, daß jeder Phase jeder HTSL-Strombegrenzereinheit 3, wie sie in FIGUR 7 dargestellt sind, mindestens ein Leistungsschalter 26 in Reihenanordnung zugeordnet ist.

## Patentansprüche

1. Vorrichtung zur Sofortabschaltung bei Kurzschlüssen in elektrischen DC- und AC-Netzen (1, 2) von Über- und Unterwasserschiffen, insbesondere Schiffen für Marineanwendungen und Offshore-Anlagen, **dadurch gekennzeichnet, daß** die Vorrichtung zur Sofortabschaltung zumindest einen Hochtemperatur-Supraleitungs(HTSL)-Strombegrenzer (3) mit einem von dem Kurzschlußstrom durchflossenen Hochtemperatur-Supraleiter aufweist, wobei der Hochtemperatur-Supraleitungs(HTSL)-Strombegrenzer (3) selbsttätig als Primärauslöser wirkt und den Kurzschlussstrom bereits im ersten Stromanstieg begrenzt, wobei der Hochtemperatur-Supraleitungs(HTSL)-Strombegrenzer (3) derart ausgelegt ist, dass er bei betrieblichen Strömen und Überströmen nicht auslöst.

2. Vorrichtung zur Sofortabschaltung nach Anspruch 1, die im DC-Netz (1) bzw. AC-Netz (2) in Kombination mit bisher im DC-Netz (1) bzw. AC-Netz (2) eingesetzten Schalt- und Schutzorganen, z.B. Sollschmelzstellen (25), Leistungsschaltern (26) ud.dgl., eingesetzt ist.

3. Vorrichtung zur Sofortabschaltung nach Anspruch 1 oder 2, bei der der HTSL-Strombegrenzer (3) in Reihe mit einem Leistungsschalter (26) oder ggf. Lasttrennschalter angeordnet ist.

4. Vorrichtung zur Sofortabschaltung nach Anspruch 3, bei der der in Reihe mit dem HTSL-Strombegrenzer (3) angeordnete Leistungsschalter (26) konstruktiv optimiert auf kurze Ausschaltzeiten ausgelegt ist.

5. Vorrichtung zur Sofortabschaltung nach einem der Ansprüche 1 bis 4, bei der ein HTSL-Strombegrenzer (3) in einer Teilnetze (19, 20; 28, 29; 30, 31; 41, 42; 50, 51) des elektrischen Netzes (1, 2) verbindenden Netzkupplung (27, 34, 40, 49) angeordnet ist.

6. Vorrichtung zur Sofortabschaltung nach einem der Ansprüche 1 bis 5, bei der HTSL-Strombegrenzer (3) an Quellen bzw. Einspeisungen mit den niedrigsten Impedanzen, wie z.B. Batterien (21), Generatoren (24; 36, 38) oder Motoren (22) im elektrischen Netz (1, 2) angeordnet sind.

7. Vorrichtung zur Sofortabschaltung nach einem der Ansprüche 1 bis 6, bei der HTSL-Strombegrenzer (3) in redundant aus zumindest zwei Teilnetzen gespeisten Netzabzweigen angeordnet sind.

8. Vorrichtung zur Sofortabschaltung nach einem der Ansprüche 1 bis 7, bei der ein HTSL-Strombegrenzer (3) in einem AC-Netz (2) in einer Teilnetze (41, 42) des AC-Netzes (2) verbindenden Netzkupplung (40) angeordnet ist.

9. Vorrichtung zur Sofortabschaltung nach einem der Ansprüche 1 bis 8, bei der ein HTSL-Strombegrenzer (3) in einem AC-Netz (2) an einem Generator (37, 38) angeordnet ist.

10. Vorrichtung zur Sofortabschaltung nach Anspruch 9, bei der der HTSL-Strombegrenzer (3) am Sternpunkt (37) des Generators (36) angeordnet ist.

11. Vorrichtung zur Sofortabschaltung nach Anspruch 9, bei der der HTSL-Strombegrenzer (3) in der Generatorausleitung (39) des Generators (38) angeordnet ist.

12. Vorrichtung zur Sofortabschaltung nach einem der Ansprüche 1 bis 11, bei der ein HTSL-Strombegrenzer (3) in einem AC-Netz (2) an einem in einem Niederspannungseinspeisungsabzweig (43, 44) angeordneten Transformator (45, 46) angeordnet ist.

13. Vorrichtung zur Sofortabschaltung nach Anspruch 12, bei der der HTSL-Strombegrenzer (3) an der Oberspannungsseite des im Niederspannungseinspeisungsabzweig (43, 44) angeordneten Transformators (45, 46) angeordnet ist.

14. Vorrichtung zur Sofortabschaltung nach einem der Ansprüche 1 bis 13, bei der ein HTSL-Strombegrenzer (3) in einem AC-Netz (2) an einem in einem Abzweig (47) angeordneten Stromrichtertransformator (48) angeordnet ist.

15. Vorrichtung zur Sofortabschaltung nach einem der Ansprüche 1 bis 14, bei der ein HTSL-Strombegrenzer (3) in einem AC-Netz (2) in einer Netzkupplung (49) zwischen zwei Niederspannungsteilnetzen (50, 51) angeordnet ist.

16. Vorrichtung zur Sofortabschaltung nach einem der Ansprüche 1 bis 7, bei der ein HTSL-Strombegrenzer (3) in einem DC-Netz (1) in einer Teilnetze (19, 20; 28, 29; 30, 31) des DC-Netzes (1) verbindenden Netzkupplung (37, 34) angeordnet ist.

17. Vorrichtung zur Sofortabschaltung nach einem der Ansprüche 1 bis 7 und 16, bei der ein HTSL-Strombegrenzer (3) in einem DC-Netz (1) an einem Generator (24) angeordnet ist.

18. Vorrichtung zur Sofortabschaltung nach einem der Ansprüche 1 bis 7, 16 und 17, bei der ein HTSL-Strombegrenzer (3) in einem DC-Netz (1) an einer Batterie (21) angeordnet ist.

19. Vorrichtung zur Sofortabschaltung nach einem der Ansprüche 1 bis 7 und 16 bis 18, bei der ein HTSL-Strombegrenzer (3) in einem DC-Netz (1) an einem Motor (22) angeordnet ist.

20. Vorrichtung zur Sofortabschaltung nach einem der Ansprüche 1 bis 7, bei der HTSL-Strombegrenzer (3) in Gleichspannungs- oder Gleichstromzwischenkreisen, z.B. von Umrichtern und Gleichstromschaltanlagen, an Netzkupplungen, Einspeisungs- und/oder Abgangszweigen angeordnet sind.

21. Vorrichtung zur Sofortabschaltung nach einem der Ansprüche 1 bis 20, deren HTSL-Strombegrenzer (3) als Hochtemperatursupraleitungswerkstoff aus Y (Yttrium) Ba (Barium)Cu(Kupfer)O(Sauerstoff)-Verbindungen besteht, die in Dünnfilmtechnik auf ein Substrat aufgebracht sind.

22. Vorrichtung zur Sofortabschaltung nach Anspruch 21, bei deren HTSL-Strombegrenzer (3) zusätzlich zur dünnen Schicht aus Hochtemperatursupraleitungswerkstoff auf dem Substrat eine Shuntschicht, vorzugsweise aus Gold, angeordnet ist, die wesentlich dünner als die dünne Schicht aus Hochtemperatursupraleitungswerkstoff ist.

23. Vorrichtung zur Sofortabschaltung nach Anspruch 21 oder 22, bei deren HTSL-Strombegrenzer (3) die dünne Schicht aus Hochtemperatursupraleitungswerkstoff so bemessen ist, daß der Durchlaßstromwert ID des HTSL-Strombegrenzers (3) ca. dem 3fachen des Nennstroms INFCL entspricht.

24. Vorrichtung zur Sofortabschaltung nach einem der Ansprüche 1 bis 23, bei dem ein Kryostat (4) des HTSL-Strombegrenzers (3) mit einem zusätzlichen Kältemittelreservoir ausgerüstet ist.

25. Vorrichtung zur Sofortabschaltung nach Anspruch 24, bei dem das zusätzliche Kältemittelreservoir im Kryostat (4) selbst berücksichtigt ist.

26. Vorrichtung zur Sofortabschaltung nach Anspruch 24, bei dem das zusätzliche Kältemittelreservoir als über Verbindungsleitungen an den Kryostat (4) angeschlossener externer Ausgleichsbehälter ausgebildet ist.

## Claims

1. Apparatus for immediate disconnection in the event of short circuits in electrical DC and AC networks (1, 2) in surface ships and submarines, in particular ships for naval purposes, and offshore facilities, **characterized in that** the apparatus for immediate disconnection has at least one high-temperature superconducting (HTS) current limiter (3) with a high-temperature superconductor through which the short-circuit current flows, with the high-temperature superconducting (HTSL) current limiter (3) automatically acting as a primary release, and limiting the short-circuit current even in the first current rise, and with the high-temperature superconducting (HTSL) current limiter (3) being designed such that it does not trip in response to normal operating currents and overcurrents.

2. Apparatus for immediate disconnection according to Claim 1, which is used in the DC network (1) and/or AC network (2) in conjunction with switching and protective devices which are already used in the DC network (1) and/or AC network (2), for example pseudo fuses (25), circuit breakers (26) and the like.

3. Apparatus for immediate disconnection according to Claim 1 or 2, in which the HTS current limiter (3) is arranged in series with a circuit breaker (26) or, possibly, a switch disconnector.

4. Apparatus for immediate disconnection according to Claim 3, in which the circuit breaker (26) which is arranged in series with the HTS current limiter (3) is designed such that it is physically optimized for short switching-off times.

5. Apparatus for immediate disconnection according to one of Claims 1 to 4, in which an HTS current limiter (3) is arranged in a network coupling (27, 34, 40, 49) which connects network elements (19, 20; 28, 29; 30, 31; 41, 42; 50, 51) of the electrical network (1, 2).

6. Apparatus for immediate disconnection according to one of Claims 1 to 5, in which HTS current limiters (3) are arranged on sources or feeders with the lowest impedances, such as batteries (21), generators (24; 36, 38) or motors (22) in the electrical network (1, 2).

7. Apparatus for immediate disconnection according to one of Claims 1 to 6, in which HTS current limiters (3) are arranged in network branches which are fed in a redundant manner from at least two network elements.

8. Apparatus for immediate disconnection according to one of Claims 1 to 7, in which an HTS current limiter (3) in an AC network (2) is arranged in a network coupling (40) which connects network elements (41, 42) of the AC network (2).

9. Apparatus for immediate disconnection according to one of Claims 1 to 8, in which an HTS current limiter (3) in an AC network (2) is arranged on a generator (37, 38).

10. Apparatus for immediate disconnection according to Claim 9, in which the HTS current limiter (3) is arranged at the star point (37) of the generator (36).

11. Apparatus for immediate disconnection according to Claim 9, in which the HTS current limiter (3) is arranged in the generator output line (39) of the generator (38).

12. Apparatus for immediate disconnection according to one of Claims 1 to 11, in which an HTS current limiter (3) in an AC network (2) is arranged on a transformer (45, 46), which is arranged in a low-voltage feeder branch (43, 44).

13. Apparatus for immediate disconnection according to Claim 12, in which the HTS current limiter (3) is arranged on the high-voltage side of the transformer (45, 46) which is arranged in the low-voltage feeder branch (43, 44).

14. Apparatus for immediate disconnection according to one of Claims 1 to 13, in which an HTS current limiter (3) in an AC network (2) is arranged on a converter transformer (48), which is arranged in a branch circuit (47).

15. Apparatus for immediate disconnection according to one of Claims 1 to 14, in which an HTS current limiter (3) in an AC network (2) is arranged in a network coupling (49) between two low-voltage network elements (50, 51).

16. Apparatus for immediate disconnection according to one of Claims 1 to 7, in which an HTS current limiter (3) in a DC network (1) is arranged in a network coupling (37, 34) which connects network elements (19, 20; 28, 29; 30, 31) of the DC network (1).

17. Apparatus for immediate disconnection according to one of Claims 1 to 7 and 16, in which an HTS current limiter (3) in a DC network (1) is arranged on a generator (24).

18. Apparatus for immediate disconnection according to one of Claims 1 to 7, 16 and 17, in which an HTS current limiter (3) in a DC network (1) is arranged on a battery (21).

19. Apparatus for immediate disconnection according to one of Claims 1 to 7 and 16 to 18, in which an HTS current limiter (3) in a DC network (1) is arranged on a motor (22).

20. Apparatus for immediate disconnection according to one of Claims 1 to 7, in which the HTS current limiter (3) is arranged in DC voltage or direct current intermediate circuits, for example of converters and direct-current switchgear assemblies, on network couplings, feeder and/or outgoer branch circuits.

21. Apparatus for immediate disconnection according to one of Claims 1 to 20, whose HTS current limiter (3) is composed of Y(yttrium)Ba(barium)Cu(copper)O(oxygen) compounds as the high-temperature superconducting material, which are applied to a substrate using thin-film technology.

22. Apparatus for immediate disconnection according to Claim 21, in whose HTS current limiter (3) a shunt layer, preferably composed of gold, and which is considerably thinner than the thin layer composed of high-temperature superconducting material, is arranged on the substrate in addition to the thin layer of high-temperature superconducting material.

23. Apparatus for immediate disconnection according to Claim 21 or 22, in whose HTS current limiter (3) the thin layer of high-temperature superconducting material is of such a size that the let-through current level ID of the HTS current limiter (3) corresponds to approximately three times the rated current INFCL.

24. Apparatus for immediate disconnection according to one of Claims 1 to 23, in which a cryostat (4) of the HTS current limiter (3) is equipped with an additional coolant reservoir.

25. Apparatus for immediate disconnection according to Claim 24, in which the additional coolant reservoir is considered in the cryostat (4) itself.

26. Apparatus for immediate disconnection according to Claim 24, in which the additional coolant reservoir is in the form of an external compensation container which is connected to the cryostat (4) via connecting lines.

## Revendications

1. Dispositif d'arrêt immédiat en cas de courts-circuits dans des réseaux ( 1, 2 ) électriques de courant continu et de courant alternatif de bâtiments de surface et de sous-marins, notamment de bâtiments pour des applications militaires et des installations offshore, **caractérisé en ce que** le dispositif d'arrêt immédiat a au moins un limiteur (3) de courant à supraconduction à haute température ( HTSL ), comprenant un supraconducteur à haute température, dans lequel passe le courant de court-circuit, le limiteur (3) de courant à supraconduction à haute température ( HTSL ) servant automatiquement de déclencheur primaire et le courant de court-circuit étant limité déjà à la première élévation de courant, le limiteur de courant à supraconduction à haute température ( HTSL ) étant conçu pour ne pas se déclencher à des courants de fonctionnement et à des courants de surintensité.

2. Dispositif d'arrêt immédiat suivant la revendication 1, qui est monté dans le réseau ( 1 ) à courant continu ou dans le réseau (2) à courant alternatif en combinaison avec des organes de commutation et de protection montés jusqu'ici dans le réseau ( 1 ) à courant continu ou dans le réseau (2) à courant alternatif, par exemple des points (25) destinés à fondre, des disjoncteurs (26) et analogues.

3. Dispositif d'arrêt immédiat suivant la revendication 1 ou 2, dans lequel le limiteur ( 3 ) de courant ( HTSL ) est monté en série avec un disjoncteur ( 26 ) ou, le cas échéant, un sectionneur à coupure en charge.

4. Dispositif d'arrêt immédiat suivant la revendication 3, dans lequel le disjoncteur (26) monté en série avec le limiteur ( 3 ) de courant ( HTSL ) est conçu de manière à ce que sa construction soit optimisée pour des temps courts de déconnexion.

5. Dispositif d'arrêt immédiat suivant l'une des revendications 1 à 4, dans lequel un limiteur ( 3 ) de courant ( HTSL ) est monté dans un couplage ( 27, 34, 40, 49) de réseau reliant des sous-réseaux ( 19, 20 ; 28, 29 ; 30, 31 ; 41, 42 ; 50, 51 ) du réseau ( 1, 2 ) électrique.

6. Dispositif d'arrêt immédiat suivant l'une des revendications 1 à 5, dans lequel des limiteurs (3) de courant ( HTSL ) sont montés sur des sources ou des alimentations ayant des impédances très basses, comme par exemple des batteries ( 21 ), des génératrices ( 24, 36, 38) ou des moteurs ( 22 ) du réseau ( 1, 2 ) électrique.

7. Dispositif d'arrêt immédiat suivant l'une des revendications 1 à 6, dans lequel des limiteurs (3) de courant ( HTSL ) sont montés de manière redondante dans des branches de réseau alimentées par au moins deux sous-réseaux.

8. Dispositif d'arrêt immédiat suivant l'une des revendications 1 à 7, dans lequel un limiteur ( 3 ) de courant ( HTSL ) d'un réseau (2) en courant alternatif est monté dans un couplage (40) de réseau reliant des sous-réseaux ( 41, 42 ) du réseau ( 2 ) en courant alternatif.

9. Dispositif d'arrêt immédiat suivant l'une des revendications 1 à 8, dans lequel un limiteur ( 3 ) de courant ( HTSL ) d'un réseau ( 2) en courant alternatif est monté sur une génératrice ( 37, 38 ).

10. Dispositif d'arrêt immédiat suivant la revendication 9, dans lequel le limiteur ( 3 ) de courant HTSL est monté au point ( 37 ) étoile de la génératrice ( 36 ).

11. Dispositif d'arrêt immédiat suivant la revendication 9, dans lequel le limiteur ( 3 ) de courant HTSL est monté dans la ligne (39) de sortie de la génératrice ( 38 ).

12. Dispositif d'arrêt immédiat suivant l'une des revendications 1 à 11, dans lequel un limiteur (3) de courant HTSL d'un réseau ( 2 ) en courant alternatif est monté sur un transformateur ( 45, 46 ) monté dans une branche ( 43, 44 ) d'alimentation en basse tension.

13. Dispositif d'arrêt immédiat suivant la revendication 12, dans lequel le limiteur ( 3 ) de courant HTSL est monté du côté primaire du transformateur ( 45, 46 ) monté dans la branche (43, 44) d'alimentation en basse tension.

14. Dispositif d'arrêt immédiat suivant l'une des revendications 1 à 13, dans lequel un limiteur (3) de courant HTSL d'un réseau ( 2 ) en courant alternatif est monté sur un transformateur (48) convertisseur monté dans une dérivation ( 47 ).

15. Dispositif d'arrêt immédiat suivant l'une des revendications 1 à 14, dans lequel un limiteur (3) de courant HTSL d'un réseau ( 2 ) en courant alternatif est monté dans un couplage (49) de réseau entre deux sous-réseaux ( 50, 51 ) en basse tension.

16. Dispositif d'arrêt immédiat suivant l'une des revendications 1 à 17, dans lequel un limiteur (3) de courant HTSL d'un réseau ( 1 ) en courant continu est monté dans un couplage ( 37, 34 ) de réseau reliant des sous-réseaux ( 19, 20 ; 28, 29 ; 30, 31) du réseau ( 1 ) en courant continu.

17. Dispositif d'arrêt immédiat suivant l'une des revendications 1 à 7 et 16, dans lequel un limiteur ( 3 ) de courant HTSL d'un réseau ( 1 ) en courant continu est monté sur une génératrice ( 24 ).

18. Dispositif d'arrêt immédiat suivant l'une des revendications 1 à 7, 16 et 17, dans lequel un limiteur ( 3 ) de courant HTSL d'un réseau ( 1 ) en courant continu est monté sur une batterie ( 21 ).

19. Dispositif d'arrêt immédiat suivant l'une des revendications 1 à 7, 16 à 18, dans lequel un limiteur ( 3 ) de courant HTSL d'un réseau ( 1 ) en courant continu est monté sur un moteur ( 22 ).

20. Dispositif d'arrêt immédiat suivant l'une des revendications 1 à 7, dans lequel des limiteurs (3) de courant HTSL sont montés dans des circuits intermédiaires de tension continue ou de courant continu, par exemple de convertisseurs et d'installations de commutation en courant continu, sur des couplages de réseau, des branches d'alimentation et/ou des branches de sortie.

21. Dispositif d'arrêt immédiat suivant l'une des revendications 1 à 20, dont les limiteurs (3) de courant HTSL sont constitués sous la forme de matériaux de supraconduction à haute température en composés Y ( yttrium ) Ba ( baryum ) Cu ( cuivre ) 0 ( oxygène ), qui sont déposés en technique en couche mince sur un substrat.

22. Dispositif d'arrêt immédiat suivant la revendication 21, dans le limiteur ( 3 ) de courant HTSL duquel est disposée, en plus de la couche mince en matériau de supraconduction à haute température, sur le substrat une couche de shuntage, de préférence en or, qui est sensiblement plus mince que la couche mince du matériau de supraconduction à haute température.

23. Dispositif d'arrêt immédiat suivant la revendication 21 ou 22, dans le limiteur ( 3 ) de courant HTSL duquel la couche mince en matériau de supraconduction à haute température a des dimensions telles que la valeur ID de courant à l'état passant du limiteur ( 3 ) de courant HTSL représente environ 3 fois le courant nominal INFCL.

24. Dispositif d'arrêt immédiat suivant l'une des revendications 1 à 23, dans lequel un cryostat (4) du limiteur (3) de courant HTSL est équipé d'un réservoir supplémentaire de fluide de refroidissement.

25. Dispositif d'arrêt immédiat suivant la revendication 24, dans lequel le réservoir supplémentaire de fluide de refroidissement est pris en compte lui-même dans le cryostat ( 4 ).

26. Dispositif d'arrêt immédiat suivant la revendication 24, dans lequel le réservoir supplémentaire de fluide de refroidissement est constitué sous la forme d'une cuve de compensation extérieure, reliée au cryostat ( 4 ) par des conduits de liaison.
